# EUROPEAN PATENT SPECIFICATION

(11) **EP 0 559 118 B1**
(45) Date of publication and mention of the grant of the patent: **26.04.2000**
(21) Application number: 93103228.8
(22) Date of filing: 01.03.1993
(51) Int. Cl.: G03B 42/02, H04N 1/028, G02B 26/10

(54) **Fiber optic storage phosphor imaging plate scanner**
Fiberoptischer Abtaster für eine Phosphoreszenzbildspeicherplatte
Dispositif de balayage à fibre optique pour stockage de plaque d'image à phosphore

(30) Priority: 03.03.1992 US 845107
(43) Date of publication of application: 08.09.1993
(73) Proprietor: BIO-RAD LABORATORIES, INC., Hercules California 94547 (US)
(72) Inventor: Heffelfinger, David M., San Pablo, California 94806 (US)
(74) Representative: Reinhard - Skuhra - Weise & Partner

(56) References cited:
- EP-A- 0 210 505
- EP-A- 0 218 094
- EP-A- 0 304 209
- EP-A- 0 354 882
- DE-A- 2 316 732
- DE-A- 2 361 873
- DE-A- 2 928 244
- DE-A- 3 332 909
- GB-A- 1 404 599
- US-A- 3 698 099
- US-A- 3 836 225
- US-A- 3 940 608
- US-A- 4 500 204
- ED. R G LERNER ET AL. 'Encyclopedia of Physics', ADDISON-WESLEY PUBLISHING COMPANY, INC., 1981, USA * page 534 - page 536 *

## Description

### BACKGROUND OF THE INVENTION

### 1. Field of the Invention

This invention relates generally to optical scanners and, more particularly, to devices and methods useful in scanning storage phosphor imaging plates.

### 2. Description of the Background Art

The US-Patent US-A-4 500 204 describes a scanning-type lithographic and image pick-up device for scanning a given object. The object of this system comprises two corresponding lenses, i.e. an objective lens and a condensing lens which are separated by a volume of air. Because of reflective losses occurring at each discontinuity where the index of refraction changes, the structures of this optical system leads to considerable refractive losses. The relatively large distance the light must travel between the objective lens and the condensing lens additionaly causes scattering and absorption losses.

In the EP-A-0 354 882, a fiber-optic vibration sensor is described comprising two optical fibers ending in microlenses. The beam leaving the lens is diverging causing a relatively low resolution.

The US-Patent 3,940,608 describes a fiber optic displacement measuring apparatus which consists of a fiber optic bundle coupled to a lens means. The fiber optic bundle comprises transmit and receive fibers which are preferably bundled together in a random fiber geometry at the distal end and which are separate at the proximal end. The lens means is coupled to the distal end of the fiber optic bundle and consists of four pairs of lenses. Each pair of lenses is separated from an adjacent pair by a volume of air. The face of the fiber optic bundle is positioned at the focal plane of the lens means, and a partially reflective target object is positioned at the conjugate focal plane of the lens means.

Phosphors emit light energy upon exposure to other radiant energy (phosphorescence). Phosphors absorb radiant energy which excites electrons in the phosphor into higher energy states. The higher energy states are unstable und the phosphor electrons fall back into a lower energy state emitting the energy differential as light. Typically, the emitted light energy has a different wavelength than the radiant energy inducing the phosphorescence.

Phosphors have many uses, e.g., television picture cathode ray tubes. Storage phosphors, however, have distinct properties that make them highly desirable as detectors of light and other forms of radiation. Storage phosphors remain in an excited state for very long time scales. While phosphors generally relax to their ground state after excitation in a matter of a few thousandths or hundredths of a second, storage phosphors retain an excited state for days or even weeks. This property is referred to in this application as retention. For example, storage phosphors have been patented and produced that have a retention of up to 75% in a 24-hour period when exposed to samples labeled with ³²P, a radioactive isotope.

Storage phosphors retain a latent image when exposed to a two-dimensional pattern of radiation, analogous to film. Storage phosphors, however, do not require development. In storage phosphors, the latent image is obtained by reading out the storage phosphor with a scanning beam of light. The read out beam produces an emission from the storage phosphor. The color of the emission is different from the readout color. The intensity of the emission is proportional to the original degree of localized radiation exposure retained by the storage phosphor.

Storage phosphors have a very high quantum efficiency when exposed to some types of radiation and so are desirable as a storage medium. Storage phosphors have been proposed as detectors of radioactively labeled biological samples. Storage phosphors have also been proposed as optical information storage devices and optical matrix processors.

Different devices for scanning reflected and phosphorescent light have been described. Simpkins, U.S. Patent No. 3,588,514, discloses a reflected light facsimile scanner utilizing optical fiber bundles containing emitting and collecting fibers.

Ogland et al., U.S. Patent No. 3,746,840, discloses a device for high resolution readout of information stored on a film. The device comprises a slit equal in width to the desired resolution with optical fibers behind the slit of a diameter equal to the slit width. As light crosses the slit, the optical fibers collect the light and transmit it to detectors.

Wilde et al., U.S. Patent No. 3,836,225, discloses fiber optic laser scanners which use two optical fiber sets attached to electromagnetic magnetic coils which can deflect the beam in perpendicular dimensions.

Duguay, U.S. Patent No. 3,892,468, discloses a passive array of variable length optical fibers which function as a dynamic scanner. Each consecutive fiber is incrementally longer than the preceding fiber so that light entering the fibers at the same time exits the fibers at different times and can be correlated with a different location.

Balliet et al., U.S. Patent NO. 4,467,196, discloses a manually controlled bar code scanner probe. The scanner includes a single optical fiber which alternately emits and collects light. The probe contains a half mirror allowing both emission and collection of light in the single optical fiber.

Waszkiewicz, U.S. Patent No. 4,481,142, discloses a method to control scanner resolution by reading variable numbers of sensors in a sensor array.

Moriguchi, U.S. Patent No. 4,490,740, discloses a multicolor optical reading device which comprises a high intensity light and several filters of different hues. The light of different hues is transported to the reading plate by optical fibers and is reflected to mirrors and a detector.

Margolin, U.S. Patent No. 4,748,680, discloses a color scanning device utilizing a plurality of fiber optic arrays similar to Waszkiewicz in which each array corresponds to a different color associated with a color filter.

Tomei et al., U.S. Patent No. 4,877,966, discloses a device for measurement of low-level laser induced phosphorescence. The laser is directed through a beam expander and then aimed by mirrors. The induced phosphorescence is collected by a fiber optic face plate and passed to a photomultiplier tube.

The scanners described above do not take full advantage of the potential of storage phosphors. Storage phosphors have an inherently high capacity for storing incident radiation in a latent image. Storage phosphors have an inherent dynamic range on the order of 10⁵ and higher. Scanners of storage phosphors need to have the highest possible collection efficiency of the light emitted by the storage phosphors. The lower the smallest unit of light that can be discerned by the scanner, the greater the dynamic range of the scanner.

Further, scanners which emit radiation or collect phosphorescence from a relatively large area of the plate lose specificity. Storage phosphor scanners require high resolution or a very small spot size of the read out beam.

Also, the scanners must be capable of differentiating between reflected radiant energy and phosphor emissions. Often, more reflected radiant energy than phosphorescence strikes scanner collecting mechanisms. In order to accurately read the information stored on the plate, the scanner must only sense the phosphorescence.

Storage phosphors can resolve features in the original sample as small as one tenth of a millimeter. In some cases, it may be desirable to be able to read out the latent image at a low resolution to minimize scan time and to minimize the amount of memory required to store an image. It may then be desirable to go back and scan sub-regions or features of the latent image in the storage phosphor that require higher resolution. This requires a scanner with not only high resolution and specificity, but also repeatable alignment of a low resolution scan with a subsequent high resolution scan. This requires a scanner with an addressable scanning head design. This would also be required for scanners used to retrieve information from storage phosphors used as optical memory devices.

For these reasons it is desirable to provide scanning devices capable of exciting phosphorescence in a localized region of a storage phosphor imaging plate and efficiently collecting and sensing low level phosphorescence. The present invention provides a system for precise and efficient excitation and collection of phosphorescence.

### SUMMARY OF THE INVENTION

The present invention provides a storage phosphor imaging plate scanner which is both sensitive and highly specific. The optical fiber cable of the invention incorporated in the scanner allows both precise localization of exciting radiation and efficient collection of induced phosphorescence.

The optical fiber cable of the invention as defined in claim 1 comprises a bifurcated optical fiber bundle, a means for focusing light into the proximal end of at least one emitter fiber, a means for focusing light out of the distal end of at least one emitter fiber, and a means for collecting light in the distal end of at least one collecting fiber.

The bifurcated optical fiber bundle has proximal and distal ends and comprises two discrete sets of optical fibers: at least one emitter fiber and at least one collecting fiber. Proximally, the emitter fiber(s) is joined to a means for directing light into the emitter fiber(s). Distally, the emitter fiber(s) is joined to a means to direct light out of the emitter fiber(s). Also located distally is a means to direct light into the collecting fiber(s). The distal ends of the emitter fiber(s) and the collecting fiber(s) are geometrically arranged so as to allow the collecting fiber(s) to efficiently collect phosphorescence induced by light from the emitter fiber(s).

In one illustrative embodiment of the invention, the bifurcated optical fiber bundle contains a single emitter fiber surrounded by a plurality of collecting fibers at the distal end. In the invention, the means for focusing light into the emitter fiber is a graded index (GRIN) lens which provides efficient transmission of light from the light source to the emitter fiber. A single focusing/imaging lens comprises the means for focusing light out of the emitter fiber and collecting light in the collecting fibers. The focusing/imaging lens both focuses the emitted light to a small spot thereby increasing resolution, and efficiently collects phosphorescence thereby increasing sensitivity. At the junction of the emitter fiber, collecting fibers and the focusing/imaging lens, the single emitter fiber lies at the center of a cylindrical arrangement of collecting fibers.

The invention also provides a scanning device as defined in claim 5 incorporating the novel optical fiber cable. The scanner comprises a light source, the optical fiber cable of the invention, a scanning mechanism, and an electronic data gathering system.

In the scanning device incorporating the optical fiber cable of the invention, light radiation from the light source is focused into the emitter fiber. The light radiation transmitted through the emitter fiber is focused onto the storage phosphor imaging plate. If light emitted from the emitter fiber strikes a region of the phosphor where charge is retained, the phosphor will be read out and emit phosphorescence. Phosphorescence is directed into the collecting fiber(s). The phosphorescent emissions are transmitted to a sensor which relays electronic signals representing the phosphorescence to an information storage device.

A method to scan storage phosphor imaging plates is also provided in claim 12. The method comprises transmitting radiation capable of inducing phosphorescence through one set of optical fibers in the optical fiber cable of the invention and collecting any induced phosphorescence in different fibers of the optical fiber cable.

### BRIEF DESCRIPTION OF THE DRAWINGS

FIG. 1 is a block diagram of a storage phosphor imaging plate scanner illustrating the principles of the present invention.
FIG. 2 is a perspective diagram of one embodiment of a bifurcated optical fiber bundle constructed in accordance with the principles of the present invention.
FIG. 3 is a cross-sectional view of one embodiment of a bifurcated optical fiber bundle constructed in accordance with the principles of the present invention.
FIG. 4 is an axial cut away view of the distal portion of one embodiment of a bifurcated optical fiber bundle constructed in accordance with the principles of the present invention.
FIG. 5 is an axial cross sectional view of one embodiment of a scanning head constructed in accordance with the principles of the present invention.
FIG. 6 is a perspective view of a scanning head constructed in accordance with the principles of the present invention.
Fig. 7 illustrates a lens having an anti-reflective coating such as may be used in certain embodiments of the present invention.
FIG. 8 illustrates the dynamic range of a scanner constructed in accordance with the principles of the present invention.

### DESCRIPTION OF THE SPECIFIC EMBODIMENTS

According to the present invention, devices and methods are provided for scanning storage phosphor imaging plates. The invention may be practiced on storage phosphor imaging plates containing a variety of phosphors.

The present invention provides an optical fiber cable for scanning storage phosphor imaging plates comprising a bifurcated bundle of optical fibers having distal and proximal ends, the optical fibers comprising at least one emitter fiber and at least one collecting fiber, a means for focusing light into the proximal end of the at least one emitter fiber, a means for focusing light out of the distal end of the at least one emitter fiber; and a means for collecting light in the distal end of the at least one collecting fiber.

In one illustrative embodiment of the invention, the optical fiber cable comprises a bifurcated bundle of optical fibers having distal and proximal ends, the optical fiber cable further comprising at least one emitter fiber and at least one collecting fiber, a GRIN type coupling lens joined to the proximal end of the at least one emitter fiber, and a focusing/imaging lens joined to the distal ends of at least one emitter fiber and at least one collecting fiber.

The invention also provides a storage phosphor imaging plate scanner comprising a light source; an optical fiber cable comprises a bifurcated bundle of optical fibers having distal and proximal ends, the optical fiber cable further comprising at least one emitter fiber and at least one collecting fiber, a GRIN type coupling lens joined to the proximal end of the at least one emitter fiber, and a focusing/imaging lens joined to the distal ends of the at least one emitter fiber and at least one collecting fiber; a lens mount secured to the distal end of the optical fiber cable; a scanning mechanism joined to the lens mount; a sensor joined to the proximal ends of the collecting fibers in the optical fiber cable; signal conditioning electronics which receive input from the sensor; and a data storage device which receives input from the signal conditioning electronics.

The invention also provides a method for scanning a storage phosphor imaging plate comprising transmitting radiation from a light source into at least one selected optical fiber of an optical fiber bundle and, upon emerging therefrom, to the storage phosphor imaging plate, collecting phosphorescence induced by the radiation from the light source in at least one optical fiber of the optical fiber bundle other than the selected optical fiber, transmitting the phosphorescence induced by the radiation from the light source to a sensor, transmitting information representative of the phosphorescence induced by the radiation from the light source from the sensor to a data storage device.

As used herein, the term "light" refers to any type of electromagnetic radiation capable of inducing phosphorescence. Light includes any type of electromagnetic radiation, e.g., electromagnetic radiation in the visible spectrum, electromagnetic radiation in the infrared spectrum, electromagnetic radiation in the ultraviolet spectrum, and the like. A light source is any device capable of producing electromagnetic radiation which can induce phosphorescence.

One element of the optical fiber cable is a bifurcated bundle of optical fibers. The term "bifurcated" is used herein to denote that the fibers in the bundle fall within two groups -- one group designated as "emitter" fiber(s) and serving the function of transmitting radiation from a light source to the storage phosphor imaging plate, and the other group designated as "collecting" fiber(s) and serving the function of collecting induced radiation from phosphors on the plate and transmitting the phosphorescence thus collected to a sensor. The emitter fiber(s) may be chosen so as to optimize the transmission of the radiation from the light source. The collecting fiber(s) may likewise be chosen so as to optimize the transmission of the phosphorescence from the storage phosphor imaging plate.

Proximally, the emitter fiber(s) and the collecting fiber(s) are not joined in the optical fiber cable. The separation of the emitter fiber(s) and the collecting fiber(s) facilitates connection with a light source and sensor. The proximal portions of the emitter fiber(s) and the collecting fiber(s) which are not joined may be separately surrounded by a flexible protective covering such as PVC monocoil, plastic flexible tubing, or the like. The length of the unjoined portion of the emitter fiber(s) is not critical and may vary. Generally, the length of the unjoined portion of the emitter fiber(s) is about 25 cm to about 200 cm, usually about 25 cm to about 35 cm and preferably about 30 cm. Likewise, the length of the unjoined portion of the collecting fiber(s) is not critical and may vary. Generally, the length of the unjoined portion of the collecting fiber(s) is about 25 cm to about 200 cm, usually about 25 cm to about 35 cm and preferably about 30 cm.

Distally, the emitter fiber(s) and the collecting fiber(s) are held together in a flexible protective covering such as PVC monocoil, plastic flexible tubing, or the like. The length of the joined portions of the emitter fiber(s) and the collecting fiber(s) is not critical and may vary. Generally, the length of the joined portions of the emitter fiber(s) and the collecting fiber(s) is about 25 cm to about 200 cm, usually about 50 cm to about 100 cm and preferably about 60 cm.

The number of fibers in each group is not critical and may vary, such that each group contains at least one such fiber. In general, the number of fibers in each group will not exceed about 300, although this is likewise not critical. In preferred embodiments of the invention, the number of emitter fibers will range from about 1 to about 10, and the number of collecting fibers will range from about 1 to about 300. In particularly preferred embodiments, the number of emitter fibers will be less than the number of collecting fibers, and in the most preferred embodiments, only one emitter fiber is included in the bundle while about 100 to about 200 collecting fibers are included.

The physical arrangement of the fibers in the bundle and the shape of the bundle cross section are also not critical and may vary. Any arrangement of cross sectional shape may be used depending on the number of each type of fiber. In general, particularly for those embodiments in which the number of collecting fibers exceeds the number of emitter fibers, arrangements in which the emitter fiber(s) occupy the center of the bundle, surrounded by collecting fibers, are preferred. As for the bundle cross section, circular cross sections are preferred.

The emitter fiber(s) are individually surrounded by a cladding such as fused silica, glass, polyimide, other polymers, or the like. The emitter fiber(s) may have an internal diameter of 10 µm to 1,000 µm, usually 10 µm to 200 µm, and preferably 200 µm. The numerical aperture of the emitter fiber(s) may be .1 to .5, usually .2 to .4 and preferably .4. The emitter fiber(s) are uninterrupted throughout their length in both the joined and unjoined portions of the optical fiber cable.

The collecting fiber(s) are individually surrounded by a cladding such as fused silica, glass, polyimide, other polymers, or the like. The collecting fiber(s) may have an internal diameter of 10 µm to 1,000 µm, usually 10 µm to 200 µm, and preferably 200 µm. The numerical aperture of the collecting fiber(s) may be .1 to .5, usually .2 to .5 and preferably .5. The collecting fiber(s) are uninterrupted throughout their length in both the joined and unjoined portions of the optical fiber cable.

Proximally, the emitter fiber(s) are joined to a means for focusing light into the emitter fiber(s). The light focusing means may be a lens, modules comprising curved mirrors to focus the beam, or multi-lens devices. Use of a light focusing means for focusing the incoming light increases the light gathering efficiency of the emitter fiber(s). In the invention the light focusing means is a graded index (GRIN) lens. A GRIN lens is preferred because it causes less attenuation of the light beam and more efficient light transmission. The refractive index of the lens will be in the range of about 1.5 to about 1.66, preferably about 1.59. The pitch of the lens will generally be in the range of about .1 to about .99 and preferably about .33. The lens may be coated with an anti-reflective coating such as MgF₂, HEBBAR® coatings, V-coatings or the like. A GRIN lens may be coupled to the emitter fiber(s) so that the energy losses including coupling losses and optical fiber attenuation do not exceed 60%. The lens may be disposed in a three dimensional positioner to minimize coupling losses.

The distal end of the emitter fiber(s) is joined to a means for focusing light emerging from the emitter fiber(s). The light focusing means will focus the emerging light toward the storage phosphor imaging plate. Use of a light focusing means for focusing the emerging light increases both the efficiency and resolution of a scanner by concentrating the emerging light to a small area on the storage phosphor imaging plate.

The fiber optic cable also comprises a means for collecting light into the distal end of the collecting fiber(s). The light collecting means will increase the amount of phosphorescence from the storage phosphor imaging plate collected by the collecting fiber(s) thereby increasing the sensitivity of the scanner.

In the invention, the light focusing means and light collecting means are a single lens, and preferably a graded index (GRIN) lens, although modules comprising curved mirrors to focus the beam or multi-lens devices are also acceptable alternatives not covered by the present invention. The refractive index of the lens will be in the range of about 1.5 to about 1.65, preferably about 1.59. The pitch of the lens will generally be in the range of about .1 to about .99 and preferably about .33. The lens may be coated with an anti-reflective coating such as MgF₂, HEBBAR® coatings, V-coatings or the like. The focal length of the lens will preferably be greater than or equal to the tolerance of the storage phosphor imaging plate being scanned.

Storage phosphor imaging plate scanners may be constructed to incorporate the novel fiber optic cable described above. One element of a storage phosphor imaging plate scanner is a light source. As described above, the term "light" indicates electromagnetic radiation of any wavelength capable of inducing phosphorescence from the phosphor present on the storage phosphor imaging plate being scanned. The type of light source employed is not critical and may vary so long as the light produced will produce phosphorescence in the phosphor on the storage phosphor imaging plate being scanned. Generally the light source will be a laser, preferably a diode laser. The laser may be chosen so as to optimize phosphor excitation and phosphorescence. The laser may emit continuous radiation or preferably pulsed radiation. Pulsing the laser output allows for more discrete scanning of the storage phosphor imaging plate.

The distal end of the bifurcated optical fiber bundle, the means for focusing light out of the distal end of the emitter fiber(s), and the means for collecting light into the distal end of the collecting fiber(s) may be potted in a stainless steel ferrule with HYSOL® epoxy and polished.

In a storage phosphor imaging plate scanner, the focusing/imaging lens will be securely connected to a lens mount. If the focusing/imaging lens is potted in a stainless steel ferrule, the lens mount may be securely connected to the stainless steel ferrule. The lens mount may allow for adjustment of the lens position within the lens mount. When properly adjusted, the lens may be fixed in place with an adhesive such as optical grade epoxy.

The lens mount is connected to a two dimensional scanning mechanism. The two dimensional scanning mechanism is able to precisely locate the distal end of the fiber optic cable over the storage phosphor imaging plate being scanned. Although it is not critical, an X-Y flatbed scanning device such as a Houston Instruments® Model HI 1117 is preferred. The two dimensional scanning mechanism will generally comprise two stepper motors. The stepper motors are controlled by scanning electronics integrated with a clock circuit. Commercially available scanning mechanisms such as those used in flatbed plotters may be employed.

The proximal end of the collecting fiber(s) is joined to a sensor. The sensor is capable of being stimulated by phosphorescence from the storage phosphor imaging plate and producing an electronic signal representing the sensed phosphorescence. The sensor may be a photodiode, or preferably, a photomultiplier tube. A photomultiplier tube provides better sensitivity over the full range of visible phosphorescent emissions. A bandpass filter may be placed between the proximal end of the collecting fiber(s) and the sensor. The bandpass filter may selectively allow light having the wavelength of the phosphorescence to pass while blocking light having the wavelength of light from the light source. In this manner, the bandpass filter provides greater specificity of the signals generated by the sensor.

The electronic signals representing phosphorescence from the storage phosphor imaging plate will be transmitted to a data storage device. The data storage device is typically a computer. The computer may be an integral part of the storage phosphor imaging plate scanner or be external to the scanner. Generally electronic signals from the sensor are in analog form. The computers used in scanning devices are most conveniently digital. Signal conditioning electronics, such as an analog digital converter, are required to translate the analog signal to a digital signal. Other signal conditioning means such as a pre-amplifier followed by a track and hold amp may be required to translate the electronic signals from the sensor to the data acquisition device in specialized applications.

Computers used as data acquisition devices may also control the scanning mechanism. By this means the computer may correlate the location of the scanning mechanism and the signal from that location. The computer can then provide a reconstruction of the latent image encoded on the storage phosphor imaging plate. Commercially available software such as Hewlett Packard® Graphics Language allows control of scanning mechanisms such as addressable scanning heads.

The computer may also be programmed to alter the scanning interval. By increasing the number of points scanned on a storage phosphor imaging plate, the computer increases the resolution of the scanner. By decreasing the number of locations scanned on a storage phosphor imaging plate, the computer decreases the resolution of the scanning device. The scanning speed is inversely proportional to the number of locations scanned.

The scanning speed may also be increased by scanning only those areas of the storage phosphor imaging plate having a latent image present. The computer may be programmed to scan the storage phosphor imaging plate in sectors. If the first location scanned in a sector produces phosphorescence, the computer receives the signal and continues to scan the sector. If the computer does not receive a signal representing phosphorescence, the computer adjusts the scanning mechanism to scan the next sector. In this way, the scanner can closely scan sectors having encoded information within the sector while not scanning sectors not having encoded information. This allows both rapid scanning and high resolution.

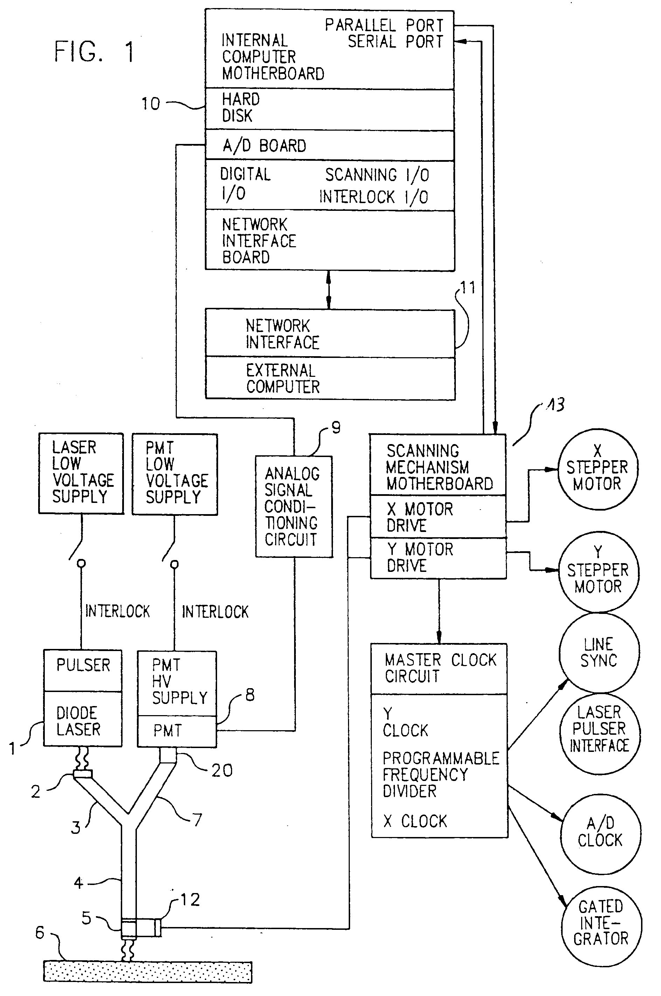

Referring now to FIG. 1, there is shown a schematic illustration of one embodiment of a storage phosphor imaging plate scanner of the present invention. The light source 1, such as a laser or light emitting diode (LED), produces light which is focused through a GRIN lens 2. The GRIN lens 2 focuses the light into emitter fiber(s) 3. The emitter fiber(s) 3 joins with the collecting fibers 7 to comprise the bifurcated optical fiber bundle 4. Light from the light source 1 is transmitted by the emitter fiber(s) 3 through the bifurcated optical fiber bundle 4 to the imaging/focusing lens 5 and focused on a small area on the storage phosphor imaging plate 6. If a latent image is on the storage phosphor imaging plate 6 at the area exposed to light from the light source 1, the phosphor will be excited and emit phosphorescence of a particular wavelength. If a latent storage is not present on the storage phosphor imaging plate 6 at the area exposed to light from the light source 1, no phosphorescence will be produced. Assuming that light from the light source 1 strikes phosphor that contains a latent image on the phosphor imaging storage plate 6, the phosphorescence will strike and enter the focusing/imaging lens 5 and be transmitted to the collecting fiber(s) 7 in the bifurcated optical fiber bundle 4. The collecting fiber(s) 7 direct the phosphorescent light to a sensor 8, such as a photomultiplier tube or photodiode, which detects the phosphorescent light and produces an electronic analog signal. A bandpass filter 20 may be placed between the collecting fiber(s) 7 and the sensor 8. The sensor 8 is interfaced with an analog signal conditioning circuit 9. The conditioned analog signal is directed to an internal computer 10 capable of storing the information from the sensor 8 or transmitting the information to an optional external computer 11.

The distal end of the bifurcated optical fiber bundle 4 and the focusing/imaging lens 5 are contained in a scanner head 12. The location of the scanner head 12 over the phosphor imaging storage plate 6 is controlled by a 2-dimensional mechanical scanner 13. The internal computer 10 controls the mechanical scanner 13 and the location of the scanner head 12 over the phosphor imaging plate 6. The internal computer 10 may store the information identifying the location of the scanner head 12 or may direct the information to an external computer 11. Either the internal computer 10 or external computer 11 are capable of coordinating the scanner head location information and the sensor information to reconstruct the information stored on the phosphor imaging plate 6.

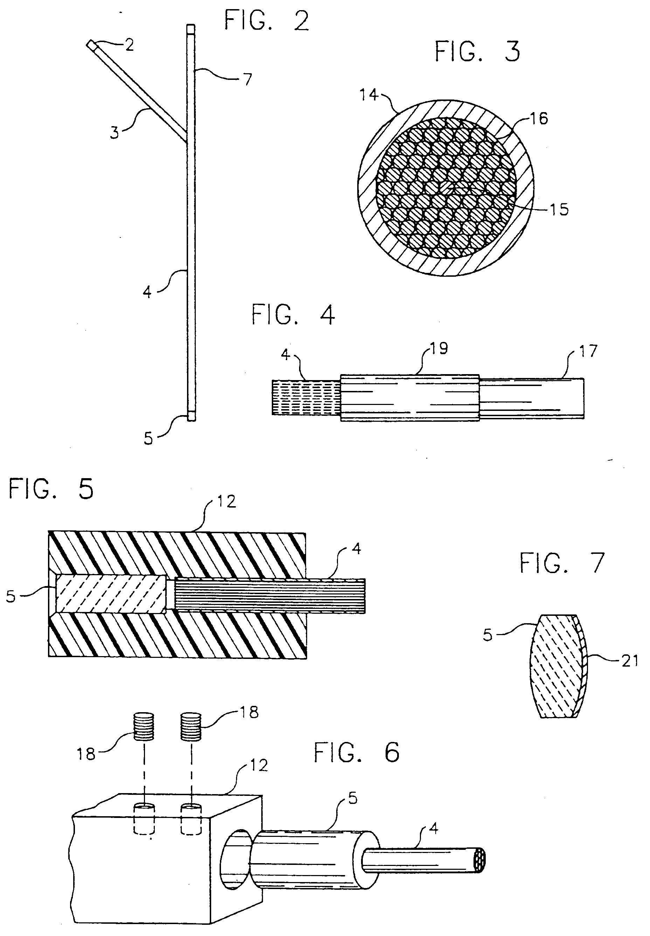

The bifurcated optical fiber bundle is illustrated in Fig. 2. Proximally, the emitter fiber(s) 3 is not joined to the collecting fiber(s) 7. More distally, the emitter fiber(s) 3 joins the collecting fiber(s) 7 to form the bifurcated optical fiber bundle 4.

The proximal end of the emitter fiber(s) 3 is joined to a GRIN lens 2. The GRIN lens 2 focuses light from the light source into the emitter fiber(s) 3 with high efficiency.

The proximal end of the collecting fiber(s) 7 joins a sensor. The sensor may be a photodiode or preferably a photomultiplier tube. A bandpass filter may be placed between the collecting leg 7 and the sensor.

The bifurcated optical fiber bundle 4 comprises a plurality of optical fibers having proximal ends and distal ends. The distal ends of the fibers coincide at the focusing/imaging lens 5. As shown in Fig. 4, the optical fibers of the bifurcated optical fiber bundle 4 are surrounded by a flexible protective covering 19 such as PVC monocoil or the like.

Referring now to Fig. 5, in a storage phosphor imaging plate scanner, the focusing/imaging lens 5 and the distal portion of the bifurcated fiber bundle 4 are contained within a scanning head 12. The focusing/imaging lens 5 is positioned in the scanning head 12 by set screws 18 (see Fig. 6). The set screws 18 allow the tolerance to be finely adjusted. After the tolerance is adjusted and the set screws 18 are tightened, the adjustment may be fixed with an adhesive such as optical grade epoxy.

Fig. 7 illustrates a focusing/imaging lens 5 with a reflective coating 21.

In a preferred embodiment of the optical fiber cable and a scanner using the cable, a bifurcated optical fiber cable was built having a single emitter fiber with a fused silica core, an internal diameter of 200 µm, a fused silica cladding, and a numerical aperture of 0.4. The collecting fibers have a fused silica core, an internal diameter of 200 µm, a polymer cladding, and a numerical aperture of 0.4.

The coupling lens is a GRIN lens and focuses light from a diode laser into the emitter fiber. The lens has an anti-reflective coating of MgF₂ to minimize losses at a laser wavelength of 910-920 nm. The coupling lens is fit into a 3 dimensional positioner which may be adjusted to minimize coupling losses. The light source is a diode laser. The diode laser, the coupling lens, and the emitter fiber are fixed in place with an adhesive.

The focusing\imaging lens is also of the GRIN type. The emitted light is focused onto an area of 130 µm. The lens is coated with MgF₂ to minimize reflective losses throughout the phosphorescent emission spectra (450-500 nm).

The distal portion of the bifurcated optical fiber bundle and the focusing/imaging lens are in a scanning head. The scanning head is mated with the scanning mechanism. The tolerance between the phosphor storage plate and the focusing/imaging lens is adjusted and fixed with an adhesive.

The laser diode is driven by a laser pulser. The diode laser emits light with a wavelength ranging from 910-920 nm and a linewidth of less than 12 nm. The diode laser is capable of a repetition rate of 8 KHz, a pulse width of 200 nsec, a duty cycle of .05%, a peak power of 15 W, and requires no more than 40 A peak current. The pulse to pulse variation in output power is less than 5% during scanning.

The sensor is a photomultiplier tube operated at high voltage and optimized for this application. A Schott® BG-39 bandpass filter is positioned between the photomultiplier tube and the collecting fibers to block infrared laser wavelengths.

The analog signal conditioning circuit is a fast amplifier followed by a fast track and hold. The output of the detector is fed to this circuit. The output of the track and hold is supplied to a 16 bit analog-to-digital (A/D) converter.

A master clock circuit decodes the stepper motor drive signals yielding a positionally related clock pulse that synchronizes the actions of the laser, gated integrator, computer and A/D converter with the stepper motors of the translation mechanism.

The clock pulse is buffered through a programmable frequency divider allowing values of n=0 to 9 for Tₙ, the final clock period generated by this circuit.

The signals generated by the master clock circuit have a jitter of less than 50 nanoseconds in relation to the laser pulse trigger and a rise time of less than 25 nanoseconds.

The A/D and I/O board is located in the expansion slots of the internal computer motherboard. The A/D converter digitalizes the analog signal from the track and hold and stores the data on the internal computer hard disc. The I/O board provides digital inputs for sensing the laser interlocks, for sensing the line syncs and frame syncs, and digital outputs for controlling the resolution of the instrument via the master clock circuit.

Using the above apparatus, data was taken using a phosphor coated plate. The spectral absorption curve of this phosphor is in the near infrared, with the emission being in the blue visible.

A series of dots were blotted onto paper using a fluid in which Phosphor 32, a radioisotope, was suspended. The paper was then placed in direct contact with the phosphor coated plate. The plate was scanned using the above apparatus.

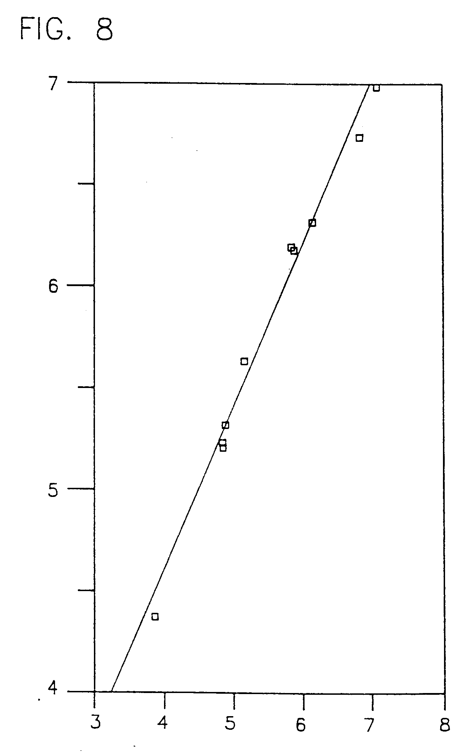

FIG. 8 illustrates the dynamic range of the scanner. The vertical axis is the log of phosphorescence intensity and the horizontal axis is the log of liquid scintillation counts. The scanner shows good linearity over four orders of magnitude, far superior to x-ray film with a typical linear range of about two orders of magnitude.

The foregoing is offered primarily for purposes of illustration. It will be readily apparent to those of skill in the art that the components of the optical fiber cable and the storage phosphor imaging plate scanner, the steps of the scanning method, and other parameters of the invention described herein may be further modified or substituted in various ways without departing from the scope of the invention as defined in the claims.

## Claims

1. An optical fiber cable for scanning a storage phosphor imaging plate (6), said optical fiber cable comprising:
a bifurcated bundle (4) of optical fibers (3, 7) having distal and proximal ends, said bifurcated bundle (4) of optical fibers (3, 7) including at least one emitter fiber (3) for transmitting radiation adapted to induce phosphorescence in a storage phosphor on said storage phosphor imaging plate (6) from a light source (1) to said storage phosphor imaging plate (6), and at least one collecting fiber (7) for collecting phosphorescent light emitted by said storage phosphor imaging plate (6) and transmitting said phosphorescent light to a sensor (8), wherein said at least one emitter fiber (3) and said at least one collecting fiber (7) are bundled together at said distal end and are separate at said proximal end, and wherein the fiber geometry of said bifurcated bundle (4) of optical fibers (3, 7) at said distal end is such as to efficiently collect said phosphorescent light;
a GRIN lens (2) joined to the proximal end of said at least one emitter fiber (3) and adapted to increase the optical coupling efficiency of said at least one emitter fiber (3) with respect to said light source (1); and
a focusing/imaging lens (5), joined to the distal ends of said at least one emitter fiber (3) and said at least one collecting fiber (7), and adapted to focus said radiation from said at least one emitter fiber (3) onto said storage phosphor imaging plate (6), and to increase the amount of said phosphorescent light collected by said at least one collecting fiber (7).

2. The optical fiber cable of claim 1, characterized in that said bifurcated bundle (4) of optical fibers (3, 7) has only one emitter fiber (3).

3. The optical fiber cable of claim 1, characterized in that said fiber geometry of said bifurcated bundle (4) of optical fibers (3, 7) comprises a plurality of collecting fibers (7) disposed concentrically around said at least one emitter fiber (3) at said distal end.

4. The optical fiber cable of claim 1, characterized in that said focusing/imaging lens (5) is a GRIN type lens joined to the distal end of said at least one emitter fiber (3) and said at least one collecting fiber (7).

5. A storage phosphor imaging plate scanner having a sampling interval comprising:
a light source (1) adapted to emit radiation suited for inducing phosphorescence in a storage phosphor on a storage phosphor imaging plate (6);
an optical fiber cable as defined in claim 1, wherein said GRIN lens mates said light source (1) to said at least one emitter fiber (3) of sad optical fiber cable;
a lens mount (12) secured to said focusing/imaging lens (5);
a scanning mechanism (13) joined to said lens mount (12);
a sensor (8) joined to the proximal ends of said at least one collecting fiber (7) in said optical fiber cable and adapted to detect induced phosphorescence from said storage phosphor imaging plate (6) and to produce a signal representing said induced phosphorescence;
signal conditioning electronics (9) which receive said signal from said sensor (8);
a data storage device (10) which receives input from said signal conditioning electronics (9).

6. A storage phosphor imaging plate scanner according to claim 5, characterized in that said sensor (8) is a photodiode or a photomultiplier tube.

7. A storage phosphor imaging plate scanner according to claim 5, characterized in that said scanning mechanism (13) is an addressable scanning head.

8. A storage phosphor imaging plate scanner according to claim 5, characterized in that said data storage device (10) is a computer that controls the scanning mechanism (13).

9. A storage phosphor imaging plate scanner according to claim 5, characterized in that said computer (10) can alter said sampling interval.

10. A storage phosphor imaging plate scanner according to claim 5, characterized in that said light source (1) is a laser.

11. A storage phosphor imaging plate scanner according to claim 5, characterized in that said scanning mechanism (13) is an X-Y scanning mechanism.

12. A method of storing and recovering an image stored on a storage phosphor imaging plate (6) using an optical fiber cable as defined in claim 1, said method comprising the steps of:
a) storing an image on said storage phosphor imaging plate (6) by exposing said storage phosphor imaging plate (6) to a two-dimensional pattern of storage radiation;
b) recovering said image from said storage phosphor imaging plate (6), wherein said step of recovering includes the steps of:
b1) focusing read-out radiation from a light source (1) into at least one selected optical fiber (3) of an optical fiber bundle (4), wherein said read-out radiation is adapted to induce phosphorescence in a storage phosphor on said storage phosphor imaging plate (6);
b2) focusing said read-out radiation from said light source (1) towards a point on said storage phosphor imaging plate (6) upon emerging from said at least one selected optical fiber (3) of said optical fiber bundle (4);
b3) collecting phosphorescent light induced by said read-out radiation in at least one optical fiber (7) of said optical fiber bundle (4) other than said selected optical fiber (3), wherein said phosphorescent light corresponds to a portion of said image retained at said point of said storage phosphor imaging plate (6);
b4) transmitting said phosphorescent light to a sensor (8);
b5) transmitting signals representative of said phosphorescent light from said sensor (8) to a data storage device (10); and
b6) repeating steps (b1) through (b5) for a plurality of points on said storage phosphor imaging plate (6) until said image is recovered from said storage phosphor imaging plate (6).

## Patentansprüche

1. Optisches Glasfaserkabel zum Abtasten einer Speicher-Phosphor-Bildplatte (6), wobei das optische Glasfaserkabel aufweist:
ein verzweigtes Bündel (4) von optischen Glasfasern (3, 7) mit distalen und proximalen Enden, wobei das verzweigte Bündel (4) von optischen Glasfasern (3, 7) mindestens eine Emitter-Glasfaser (3) zum Übertragen einer Strahlung, die zur Induktion einer Phosphoreszenz in einem Speicherphosphor auf der Speicher-Phosphor-Bildplatte (6) geeignet ist, ausgehend von einer Lichtquelle (1) zu der Speicher-Phosphor-Bildplatte (6), und mindestens eine Sammelglasfaser (7) aufweist zum Sammeln von phosphoreszierendem Licht, das von der Speicher-Phosphor-Bildplatte (6) emittiert wird, und zum Übertragen des phosphoreszenden Lichtes zu einem Sensor (8), wobei die mindestens eine Emitter-Glasfaser (3) und die mindestens eine Sammelglasfaser (7) an dem distalen Ende zusammengebündelt sind und an dem proximalen Ende voneinander getrennt liegen, und wobei die Glasfasergeometrie des aus optischen Glasfasern (3, 7) bestehenden verzweigten Bündels (4) an dem distalen Ende derart ausgebildet ist, dass das phosphoreszende Licht effizient gesammelt wird;
eine GRIN-Linse (2), die mit dem proximalen Ende der mindestens einen Emitter-Glasfaser (3) verbunden ist und zur Erhöhung der optischen Koppeleffizienz der mindestens einen Emitter-Glasfaser (3) in Bezug auf die Lichtquelle (1) geeignet ist; und
eine Fokusier/Abbildungslinse (5), die mit den distalen Enden der mindestens einen Emitter-Glasfaser (3) und der mindestens einen Sammel-Glasfaser (7) verbunden und dazu geeignet ist, die von der mindestens einen Emitter-Glasfaser (3) auf die Speicher-Phosphor-Bildplatte (6) abgegebenen Strahlung zu fokussieren und die Menge des phosphoreszierenden Lichtes, das durch die mindestens eine Sammel-Glasfaser (7) gesammelt wird, zu erhöhen.

2. Optische Glasfasern nach Anspruch 1,
**dadurch gekennzeichnet,**
dass das verzweigte Bündel (4) von optischen Glasfasern (3, 7) lediglich eine Emitter-Glasfaser (3) aufweist.

3. Optische Glasfasern nach Anspruch 1,
**dadurch gekennzeichnet,**
dass die Glasfasergeometrie des verzweigten Bündels (4) von optischen Glasfasern (3, 7) eine Vielzahl von Sammel-Glasfasern (7) aufweist, die konzentrisch um die mindestens eine Emitter-Glasfaser (3) an dem distalen Ende angeordnet sind.

4. Optische Glasfaser nach Anspruch 1,
**dadurch gekennzeichnet,**
dass die Fokusier/Abbildungslinse (5) eine GRIN-Linse ist, die mit dem distalen Ende der mindestens einen Emitter-Glasfaser (3) und der mindestens einen Sammel-Glasfaser (7) verbunden ist.

5. Speicher-Phosphor-Bildplatten-Abtastvorrichtung, die ein Abtastintervall aufweist, mit:
einer Lichtquelle (1), die zur Emission von Strahlung, durch die Phosphoreszenz in einem Speicher-Phosphor auf einer Speicher-Phosphor-Bildplatte (6) induzierbar ist, geeignet ist;
einem optischen Glasfaserkabel gemäß Patentanspruch 1, bei dem die GRIN-Linse die Lichtquelle (1) an die mindestens eine Emitter-Glasfaser (3) des optischen Glasfaserkabels anpasst;
einer Linsen-Halterung (12), die an die Fokusier/Abbildungslinse (5) befestigt ist;
einem Abtastmechanismus (13), der mit der Linsen-Halterung (12) verbunden ist;
einem Sensor (8), der mit den proximalen Enden der mindestens einen Sammel-Glasfaser (7) in dem optischen Glasfaserkabel verbunden und dazu ausgelegt ist, die von der Speicher-Phosphor-Bildplatte (6) abgegebene induzierte Phosphoreszenz zu erfassen und ein Signal zu erzeugen, welches die induzierte Phosphoreszenz wiedergibt;
einer Signalaufbereitungselektronik (9), die das von dem Sensor (8) abgegebene Signal empfangt; und mit
einer Datenspeichereinrichtung (10), die ein Eingangssignal von der Signalaufbereitungselektronik (9) empfangt.

6. Speicher-Phosphor-Bilplattenabtastungsvorrichtung nach Anspruch 5,
**dadurch gekennzeichnet,**
dass der Sensor (8) eine Photodiode oder eine Photovervielfacherröhre ist.

7. Speicher-Phosphor-Bildplattenabtastungsvorrichtung nach Anspruch 5,
**dadurch gekennzeichnet,**
dass der Abtastmechanismus (13) ein adressierbarer Abtastkopf ist.

8. Speicher-Phosphor-Bildplattenabtastungsvorrichtung nach Anspruch 5,
**dadurch gekennzeichnet,**
dass die Daten-Speichereinrichtung (10) ein Computer ist, der den Abtastmechanismus (13) steuert.

9. Speicher-Phosphor-Bildplattenabtastungsvorrichtung nach Anspruch 5,
**dadurch gekennzeichnet,**
dass der Computer (10) das Abtastintervall verändern kann.

10. Speicher-Phosphor-Bildplattenabtastungsvorrichtung nach Anspruch 5,
**dadurch gekennzeichnet,**
dass die Lichtquelle (1) ein Laser ist.

11. Speicher-Phosphor-Bildplattenabtastungsvorrichtung nach Anspruch 5,
**dadurch gekennzeichnet,**
dass der Abtastmechanismus (13) ein X-Y Abtastmechanismus ist.

12. Verfahren zum Speichern und Wiedergewinnen eines Bildes, das auf einer Speicher-Phosphor-Bildplatte (6) abgespeichert ist, unter Verwendung eines optisches Glasfaserkabels, wie es im Patentanspruch 1 beansprucht wird, wobei das Verfahren die folgenden Schritte aufweist:
(a) Speichern eines Bildes auf der Speicher-Phosphor-Bildplatte (6), indem die Speicher-Phosphor-Bildplatte (6) einer Speicher-Strahlung mit einem zweidimensionalen Muster ausgesetzt wird;
(b) Wiedergewinnen des Bildes von der Speicher-Phosphor-Bildplatte (6), wobei der Schritt des Wiedergewinnens die folgenden Schritte umfaßt:
(b1) Fokusieren der von der Lichtquelle (1) ausgelesenen Strahlung auf mindestens eine ausgewählte optische Glasfaser (3) eines optisches Glaslaserbündels (4), wobei die ausgelesene Strahlung sich dazu eignet eine Phosphoreszenz in einem Speicher-Phosphor auf der Speicher-Phosphor-Bildplatte (6) zu induzieren;
(b2) Fokusieren der von der Lichtquelle (1) ausgelesenen Strahlung auf einen Punkt auf der Speicher-Phosphor-Bildplatte (6), wenn diese von der mindestens einen ausgewählten optischen Glasfaser (3) des optischen Glasfaserbündels (4) austritt;
(b3) Sammeln des durch die ausgelesene Strahlung induzierten phosphoreszenten Lichts in mindestens einer optischen Glasfaser (7) des optischen Glasfaserbündels (4), wobei diese Glasfaser eine andere als die ausgewählte optische Glasfaser (3) ist, wobei das phosphoreszente Licht einem Abschnitt des Bildes entspricht, das an dem Punkt der Speicher-Phosphor-Bildplatte (6) aufbewahrt ist;
(b4) Übertragen des phosphoreszenten Lichtes zu einem Sensor (8);
(b5) Übertragen von Signalen, welche das phosphoreszente Licht wiedergeben, von dem Sensor (8) zu einer Datenspeichereinrichtung (10); und
(b6) Wiederholen der Schritte b1 bis b5 für eine Vielzahl von Punkten auf der Speicher-Phosphor-Bildplatte (6) bis das Bild von der Speicher-Phosphor-Bildplatte (6) wiedergewonnen ist.

## Revendications

1. Câble à fibres optiques pour le balayage d'une plaque (6) de formation d'images à substance luminescente de mémoire, ledit câble à fibres optiques comprenant :
un faisceau bifurqué (4) de fibres optiques (3,7) possédant des extrémités distales et proximales, ledit faisceau birfuqué (4) de fibres optiques (3,7) comprenant au moins une fibre émettrice (3) pour la transmission d'un rayonnement apte à induire une phosphorescence dans une substance luminescente de mémoire sur ladite plaque (6) de formation d'images à substance luminescente de mémoire depuis une source de lumière (1) sur ladite plaque (6) de formation d'images à substance luminescente de mémoire, et au moins une fibre de collecte (7) pour collecter une lumière phosphorescente émise par ladite plaque (6) de formation d'images à substance luminescente de mémoire et transmettre ladite lumière phosphorescente à un capteur (8), dans lequel ladite au moins une fibre émettrice (3) et ladite au moins une fibre de collecte (7) sont réunies conjointement au niveau de ladite extrémité distale et sont séparées au niveau de ladite extrémité proximale, et dans lequel la géométrie des fibres dudit faisceau bifurqué (4) de fibres optiques (3,7) au niveau de ladite extrémité distale est telle qu'elle permet de collecter efficacement ladite lumière phosphorescente;
une lentille GRIN (2) réunie à l'extrémité proximale de ladite au moins une fibre émettrice (3), et adaptée pour accroître le rendement de couplage optique de ladite au moins une fibre émettrice (3) par rapport à ladite source de lumière (1); et
une lentille de focalisation / de formation d'images (5), réunie aux extrémités distales de ladite au moins une fibre émettrice (3) et de ladite au moins une fibre de collecte (7) et adaptée pour focaliser ledit rayonnement depuis ladite au moins une fibre émettrice (3) sur ladite plaque (6) de formation d'images à substance luminescente de mémoire et accroître la quantité de ladite lumière phosphorescente collectée par ladite au moins une fibre de collecte (7).

2. Fibre optique selon la revendication 1, caractérisée en ce que ledit faisceau bifurqué (4) de fibres optiques (3,7) possède une seule fibre émettrice (3).

3. Câble à fibres optiques selon la revendication 1, caractérisé en ce que ladite géométrie des fibres dudit faisceau bifurqué (4) de fibres optiques (3,7) comprend une pluralité de fibres de collecte (7) disposées concentriquement autour de ladite au moins une fibre émettrice (3) au niveau de ladite extrémité distale.

4. Câble à fibres optiques selon la revendication 1, caractérisé en ce que ladite lentille de focalisation / de formation d'images (5) est une lentille de type GRIN réunie à l'extrémité distale de ladite au moins une fibre émettrice (3) et de ladite au moins une fibre de collecte (7).

5. Scanner pour plaque de formation d'images à substance luminescente de mémoire comportant possédant un intervalle d'échantillonnage, comprenant :
une source de lumière (1) adaptée pour émettre un rayonnement convenant pour induire une phosphorescence dans une substance luminescente de mémoire sur une plaque (6) de formation d'images à substance luminescente de mémoire;
un câble à fibres optique tel que défini dans la revendication 1, dans lequel ladite lentille GRIN accouple ladite source de lumière (1) à ladite au moins une fibre émettrice (3) dudit câble à fibres optiques;
un support de lentille (12) fixé à ladite lentille de focalisation / de formation d'images (5);
un mécanisme de balayage (13) réuni audit support de lentille (12);
un capteur (8) réuni aux extrémités proximales de ladite au moins une fibre de collecte (7) dans ledit câble à fibres optiques et adapté pour détecter une phosphorescence induite provenant de la plaque (6) de formation d'images à substance luminescente de mémoire et pour produire un signal représentant ladite phosphorescence induite;
un système électronique (9) de conditionnement de signal, qui reçoit ledit signal provenant dudit capteur (8);
un dispositif (10) de mémorisation de données, qui reçoit un signal d'entrée provenant dudit système électronique (9) de conditionnement de signal.

6. Scanner pour plaque de formation d'images à substance luminescente de mémoire, caractérisé en ce que ledit capteur (8) est une photodiode ou un tube photomultiplicateur.

7. Scanner pour plaque de formation d'images à substance luminescente de mémoire selon la revendication 5, caractérisé en ce que ledit mécanisme de balayage (13) est une tête de balayage adressable.

8. Scanner pour plaque de formation d'images à substance luminescente de mémoire selon la revendication 5, caractérisé en ce que ledit dispositif (10) de mémorisation de données est un ordinateur qui commande le mécanisme de balayage (13).

9. Scanner pour plaque de formation d'images à substance luminescente de mémoire selon la revendication 5, caractérisé en ce que ledit ordinateur (10) peut modifier ledit intervalle d'échantillonnage.

10. Scanner pour plaque de formation d'images à substance luminescente de mémoire selon la revendication 5, caractérisé en ce que ladite source de lumière (1) est un laser.

11. Scanner pour plaque de formation d'images à substance luminescente de mémoire selon la revendication 5, caractérisé en ce que le mécanisme de balayage (13) est un mécanisme de balayage suivant X-Y.

12. Procédé pour mémoriser et récupérer une image mémorisée sur une plaque (6) de formation d'images à substance luminescente de mémoire, utilisant un câble à fibres optiques selon la revendication 1, ledit procédé comprenant les étapes consistant à :
a) mémoriser une image sur ladite plaque (6) de formation d'image à substance luminescente de mémoire par exposition de ladite plaque (6) de formation d'images à substance luminescente de mémoire à une configuration bidimensionnelle d'un rayonnement de mémorisation;
b) récupérer ladite image à partir de ladite plaque (6) de formation d'images à substance luminescente de mémoire, ladite étape de récupération comprenant les étapes consistant à :
b1) focaliser ledit rayonnement délivré par une source de lumière (1) dans au moins une fibre optique sélectionnée (3) d'un faisceau (4) de fibres optiques, ledit rayonnement lu étant adapté pour induire une phosphorescence dans une substance luminescente de mémoire située sur ladite plaque (6) de formation d'images à substance luminescente de mémoire;
b2) focaliser ledit rayonnement délivré par ladite source de lumière (1) sur un point situé sur ladite plaque (6) de formation d'images à substance luminescente de mémoire lorsqu'il sort de ladite au moins une fibre optique sélectionnée (3) du faisceau (4) de fibres optiques ;
b3) collecter une lumière phosphorescente induite par ledit rayonnement délivré, dans au moins une fibre optique (7) dudit faisceau (4) de fibres optiques, autre que ladite fibre optique sélectionnée (3), ladite lumière phosphorescente correspondant à une partie de ladite image retenue au niveau dudit point de ladite plaque (6) de formation d'images à substance luminescente de mémoire;
b4) transmettre ladite lumière phosphorescente à un capteur (8);
b5) transmettre des signaux représentatifs de ladite lumière phosphorescente depuis ledit capteur (8) à un dispositif (10) de mémorisation de données; et
b6) répéter les étapes b1) à b5) pour une pluralité de points sur ladite plaque (6) de formation d'images à substance luminescente de mémoire jusqu'à ce que ladite image soit récupérée à partir de ladite plaque (6) de formation d'images à substance luminescente de mémoire.
